# EUROPEAN PATENT SPECIFICATION

(11) **EP 2 456 156 B1**
(45) Date of publication and mention of the grant of the patent: **22.07.2015**
(21) Application number: 09847245.9
(22) Date of filing: 16.11.2009
(51) Int. Cl.: H04W 8/26, H04W 4/02, H04W 80/04, H04L 29/12

(54) **ATTACHMENT METHOD AND SYSTEM WITH IDENTIFIER AND LOCATION SPLITTING IN NEXT GENERATION NETWORK**
ANSCHLUSSVERFAHREN UND SYSTEM MIT IDENTIFIKATOR UND STANDORTAUFTEILUNG IN EINEM NETZWERK DER NÄCHSTEN GENERATION
PROCÉDÉ ET SYSTÈME DE CONNEXION AVEC DÉDOUBLEMENT D'IDENTIFIANT ET D'EMPLACEMENT DANS UN RÉSEAU DE NOUVELLE GÉNÉRATION

(30) Priority: 17.07.2009 CN 200910157947
(43) Date of publication of application: 23.05.2012
(73) Proprietor: ZTE Corporation, Shenzhen, Guangdong 518057 (CN)
(72) Inventor: ZHAO, Ningxia, Shenzhen Guangdong 518057 (CN); WU, Qiang, Shenzhen Guangdong 518057 (CN); WU, Bo, Shenzhen Guangdong 518057 (CN)
(74) Representative: Kling, Simone
(86) International application number: PCT/CN2009/074963
(87) International publication number: WO 2011/006320

(56) References cited:
- CN-A- 1 801 764
- CN-A- 101 335 676
- CN-A- 101 378 587
- GB-A- 2 424 154
- US-A1- 2004 213 260
- US-B1- 6 466 571
- US-B1- 7 130 629

## Description

### TECHNICAL FIELD

The disclosure relates to the field of communication technologies, and more particular, to a method and system for implementing an attachment process for Identification-Location Split (ID-Loc-Split) in a Next Generation Network (NGN).

### BACKGROUND

In TCP/IP protocol of the Internet, an IP address has double functions: as a location identification of a host network interface of the network-layer communication terminal in the network topology, and as an identification of a transport-layer host network interface. With the evolution of the NGN, the problems of mobility and multi-homed host have become more and more common. This drawback of semantic overload for IP address becomes increasingly striking. When a host IP address changes, not only the route is to change, but also the host ID of the communication terminal is also to change. Change of the ID causes interruption of the connection and application.

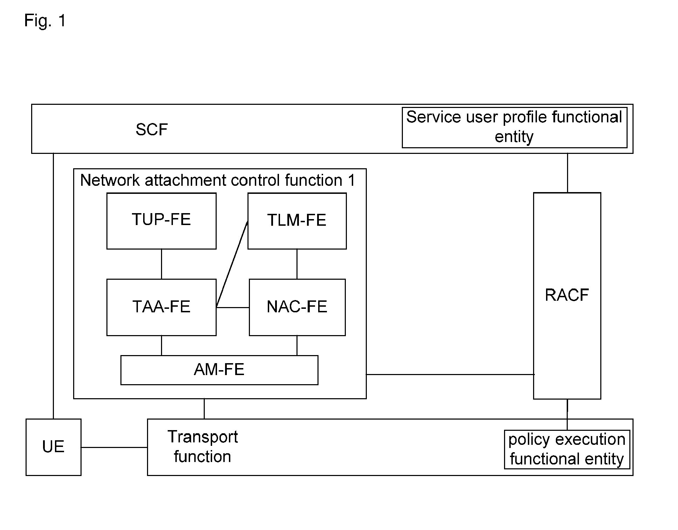

Fig. 1 is a diagram illustrating a functional framework of an existing NGN system, wherein respective functional entities function as follows:
a Transport User Profile Functional Entity (TUP-FE) is used for saving user information regarding the transport layer;
a Transport Authentication and Authorization Functional Entity (TAA-FE) is used for providing a transport layer authentication and authorization function to authenticate and authorize the network access of the user based on the user information;
an Access Management Functional Entity (AM-FE) is used for translating a network access request initiated by the user and transmitting the requests to an NAC-FE for assigning an IP address and other network configuration parameters;
a Transport Location Management Functional Entity (TLM-FE) is used for registering the IP address assigned to the user and other network location information provided by the NAC-FE; and
a Network Access Configuration Functional Entity (NAC-FE) is used for assigning an IP address to a user terminal, and meanwhile, the NAC-FE may be used for assigning other network configuration parameters (for example, an address of a DNS server, an address of a signaling proxy, etc.) to the user terminal.

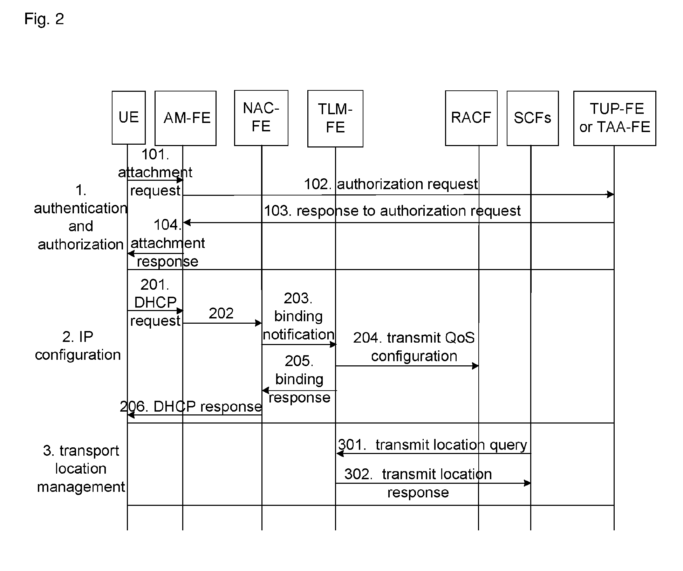

A user attachment process based on the existing NGN system functional framework is illustrated in Fig. 2.

The authentication and authorization process (steps 101-104): a UE transmits an authorization request to the Transport Authentication and Authorization Functional Entity (TAA-FE) through the Access Management Functional Entity (AM-FE), wherein the TAA-FE stores a user identifier and a certificate. Herein the user identifier may be a globally unique IP address or an identifier configured by the transport layer; the TAA-FE returns the authentication and authorization response to the user through the AM-FE, to complete the authentication and authorization process.

The IP configuration process (steps 201-206): the IP configuration process may be completed through a Dynamic Host Configuration Protocol (DHCP) or through an self-configuration process. Fig. 2 illustrates an IP address configuration through the Dynamic Host Configuration Protocol (DHCP).

Transport location management process (steps 301-302): the Transport Location Management Functional Entity (TLM-FE) performs transport location query by searching a Service Control Function (SCF). The SCF each time obtains the unique IP address used in current transportation of the user. When the user moves or the location of the user changes, it is required to re-perform the above authentication and authorization attachment process so as to obtain a new IP address, which therefore increases network load and affects the normal execution of a service or an application.

Document US 2004/213260 A1 discloses that enables proxy Mobile IP registration to be performed in a secure manner, wherein an Access Point receiving a packet from a node verifies that the source MAC address identified in the packet is in the Access Point's client association table, the Access Point ensures that a one-to-one mapping exists for the source MAC address and source IP address identified in the packet in a mapping table maintained by the Access Point, and a binding is not modified in the mobility binding table maintained by the Home Agent unless there is a one-to-one mapping in the mobility binding table between the source MAC address and the source IP address.

Document US 6466571 B1 discloses a method for finding a mobile wireless communications device when an Internet Protocol (IP) packet from a remote user over an IP network is send to the device, wherein when the home agent does not have a mobility binding record in order to route the packet to the mobile device, the home agent sends an access-request packet to an authentication server containing the IP address of the device, the authentication server maintains a table mapping the IP address for the device to an identification number uniquely associated with said device, such as the device's IMSI/ESN number.

### SUMMARY

Therefore, the main objective of the disclosure is to provide an attachment method for ID-Loc-Split in an NGN, for implementing a secure attachment of ID-Loc-Split in the NGN.

In order to achieve the above objective, the technical solution of the disclosure is implemented in the following ways.

An attachment method for Identification-Location Split, ID-Loc-Split in an Next Generation Network, NGN, the method comprises: performing a network attachment process for a User Terminal (UE) through an ID-Loc-Split Mapping Function Entity (ILSM-FE), wherein a user identification (Host ID) is used during an authentication and authorization process, the Host ID is a public key for uniquely identifying a user, the ILSM-FE performs authorization to the Host ID based on security parameters, the method specifically comprises steps of:
A: performing authentication and authorization to a user identity through the ILSM-FE during the authentication and authorization process;
B: assigning an IP address to the user terminal through an IP address configuration process; and
C: when location of a user changes,
   a) the UE or TLM-FE sends a request for user identification to location, ID/ LOC mapping, and
   b) the ILSM-FE responds to the request, and performing a mapping between the Host ID and the IP address by the ILSM-FE;
wherein when the UE is in mobility or multihoming scenario, the mapping between the Host ID and the IP address in a database of the ILSM-FE is one-to-multiple,
wherein, in step C, initiating the ID/LOC mapping request to the ILSM-FE by the user terminal, wherein the request includes a new IP address of the user; and transmitting a result of mapping from the ILSM-FE to the user terminal after the ILSM-FE performs the mapping between the Host ID and the IP address; or
firstly initiating the ID/LOC mapping request to a TLM-FE by the user terminal, wherein the request includes a new IP address of the user; and forwarding the ID/LOC mapping request from the TLM-FE to the ILSM-FE; and
after the ILSM-FE performs the mapping between the Host ID and the IP address, transmitting a result of mapping to the user terminal through the ILSM-FE; or
initiating the ID/LOC mapping request to the ILSM-FE by the TLM-FE, wherein the request includes a new IP address of the user; transmitting an ID/LOC mapping response from the ILSM-FE to the TLM-FE after the ILSM-FE performs the mapping between the Host ID and the IP address.

Further, in step A, when a Transport Authentication and Authorization Functional Entity (TAA-FE) receives an authorization request transmitted from an Access Management Functional Entity (AM-FE), transmitting a request message for querying authorization information from the TAA-FE to the ILSM-FE; wherein the request message for querying authorization information includes security parameters required for authenticating the user identity; performing authentication and authorization to the Host ID by the ILSM-FE based on the security parameters and transmitting a result of authentication and authorization from the ILSM-FE to the TAA-FE through a response message for querying authorization information.

Based on the above method, the disclosure further provides an attachment system for ID-Loc-Split in an NGN, comprising a User Terminal (UE), an Access Management Functional Entity (AM-FE), a Network Access Configuration Functional Entity (NAC-FE), a Transport Location Management Functional Entity (TLM-FE), a Resource Admission Control Function (RACF), a Service Control Function (SCF), and a Transport Authentication and Authorization Functional Entity (TAA-FE), the system further comprises:
an ID-Loc-Split Mapping Function Entity (ILSM-FE), configured to perform authentication and authorization to a user identification (Host ID) based on security parameters transmitted from the TAA-FE; when the location of a user changes, the ILSM-FE performs a mapping between the Host ID and an IP address based on an ID/LOC mapping request transmitted from the UE or the TLM-FE;
wherein when the UE is in mobility or multihoming scenario, the mapping between the Host ID and the IP address in a database of the ILSM-FE is one-to-multiple,
wherein when a location of the user changes,
the user terminal is configured to initiate the ID/LOC mapping request to the ILSM-FE, wherein the request includes a new IP address of the user; the ILSM-FE is configured to transmit a result of mapping after performing the mapping between the Host ID and the IP address; or
the user terminal is configured to firstly initiate the ID/LOC mapping request to the TLM-FE, wherein the request includes a new IP address of the user; the TLM-FE is configured to forward the ID/LOC mapping request to the ILSM-FE; the ILSM-FE is configured to transmit a result of mapping to the user terminal through the ILSM-FE after performing the mapping between the Host ID and the IP address; or
the TLM-FE is configured to initiate the ID/LOC mapping request to the ILSM-FE, wherein the request includes a new IP address of the user; the ILSM-FE is configured to transmit an ID/LOC mapping response to the TLM-FE after performing the mapping between the Host ID and the IP address.

By applying the disclosure, a secure attachment method for ID-Loc-Split in an NGN can be implemented. The mapping between the identification (Host ID) and location identification (LOC) is stored in the ILSM-FE. This mapping may be one-to-one, or one-to-multiple; in case of one-to-multiple, when a user hands over from one IP address to another IP address during a communication process, the SCF just needs to search the ILSM-FE based on the user identification (Host ID) and then update the mapping between the Host ID and the LOC, without re-performing the authentication attachment process. The disclosure enables the authentication attachment process to be independent from the location of a user, which guarantees that the ongoing application and service will not be interrupted when the location of the user changes and thereby guarantees seamless handover of the communication.

### BRIEF DESCRIPTION OF THE DRAWINGS

Fig. 1 is a diagram illustrating a functional framework of an NGN system;
Fig. 2 is a schematic diagram illustrating a conventional attachment process in an NGN;
Fig. 3 is a diagram illustrating a functional framework of an NGN system for implementing an ID-Loc-Split attachment process according to the disclosure;
Fig. 4 is a schematic diagram illustrating an ID-Loc-Split attachment process in an NGN according to the disclosure (wherein a user terminal initiates a mapping request without the participation of a network gateway);
Fig. 5 is a schematic diagram illustrating an ID-Loc-Split attachment process in an NGN according to the disclosure (wherein a user terminal initiates a mapping request with the participation of a network gateway); and
Fig. 6 is a schematic diagram illustrating an ID-Loc-Split attachment process in an NGN according to the disclosure (wherein a network side initiates a mapping request).

### DETAILED DESCRIPTION

In order to make the objective, technical solution, and advantage of the disclosure much clearer and easier to understand, the disclosure is further described in detail through the following embodiments with reference to the accompanying drawings.

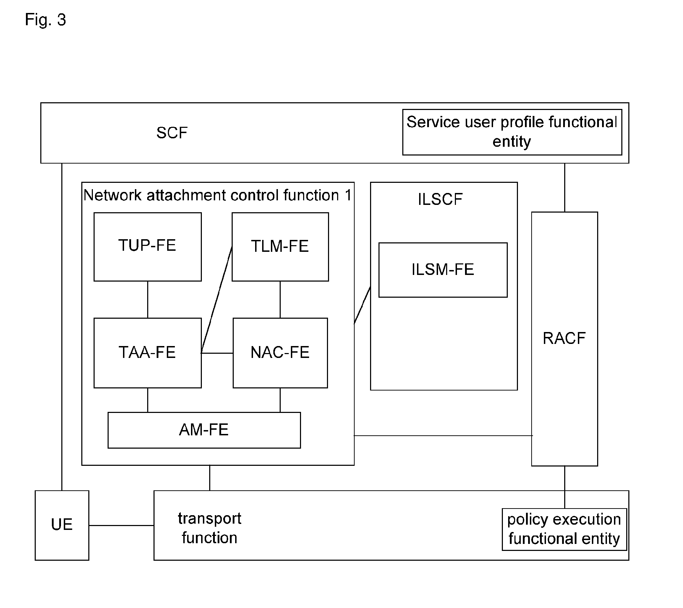

Fig. 3 is a diagram illustrating a functional framework of an NGN system for implementing an ID-Loc-Split attachment method in the NGN according to the disclosure. Different from the functional framework of an existing NGN system, the disclosure adds an ID-Loc-Split Control Function (ILSCF) based on the transport control function of the NGN, so as to implement the ID/Loc control function. The ILSCF has an ID-Loc-Split Mapping Function Entity (ILSM-FE) as a mapping database entity of a user ID-Loc-Split system in the NGN, the ILSM-FE is used for mapping the user identification (Host ID) to one or more locations (LOC). This disclosure merely uses the location attributes of the IP address to identify the location (LOC) of the user; the ILSM-FE stores parameters associated with the user; and meanwhile, an array of random numbers for authorization is provided by the ILSM-FE, which is available for the user terminal to calculate an encryption key. In the ILSM-FE, the binding is also performed by mapping between the Host ID and the LOC.

A basic idea of this disclosure is as follows: when the user performs network attachment, a Host ID is used as the user identification during the authentication and authorization process, and the user attachment process is performed through an ID-Loc-Split Mapping Function Entity (ILSM-FE). The ILSM-FE performs authentication and authorization to the user identification (Host ID). Through the Access Management Functional Entity (AM-FE), the User Terminal (UE) performs a DHCP request through the AM-FE and obtains an IP address through the NAC-FE; the mapping between the Host ID and the IP address is performed through the ILSM-FE.

This disclosure preferably selects three manners for implementing the ID-Loc-Split terminal attachment. Their main difference lies in the mapping processs between an identification and a location. The three manners are implemented as follows.

### Embodiment 1:

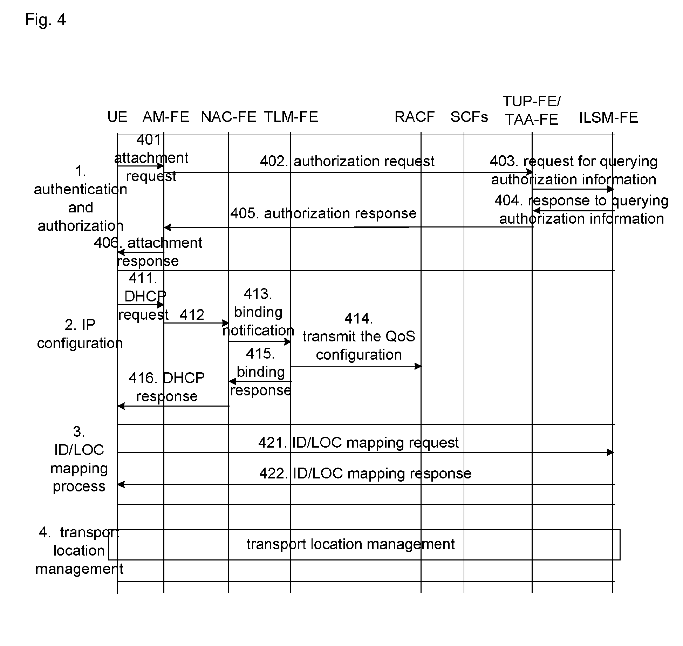

Fig. 4 is a schematic diagram illustrating an ID-Loc-Split terminal attachment process in an NGN system with the terminal initiating a mapping request and without the participation of a gateway. The specific steps are specified as follows.

### (1) The authentication and authorization process (steps 401-406):

Step 401: transmitting an attachment request from a UE to an AM-FE to request network attachment.
Step 402: transmitting an authorization request message from the AM-FE to a TAA-FE after receiving the attachment request from the UE, wherein the authorization request message includes a user identification (Host ID) and security parameters (e.g. key and half key for authenticating the user identity) which are both required for authenticating the user identity.
Step 403: transmitting a request message for querying authorization information from the TAA-FE to the ILSM-FE, the request message for querying authorization information includes the Host ID and the security parameters which are both required for authenticating the user identity.
Step 404: performing authentication and authorization to the user identity by the ILSM-FE based on the security parameters and transmitting a result of authorization from the ILSM-FE to the TAA-FE through a response message for querying the authorization information, the response message includes the result of authorization (success or failure).

In a preferred embodiment of the disclosure, the Host ID is a public key for uniquely identifying a user, and the ILSM-FE performs authentication to the Host ID based on the security parameters according to a key algorithm, thereby guaranteeing security of the attachment process.

Step 405: transmitting an authorization response including the result of authorization from the TAA-FE to the AM-FE.

Step 406: transmitting an attachment request response message including the result of authorization from the AM-FE to the UE.

### (2) The IP address configuration process (steps 411-416):

The IP configuration process may be performed through self-configuration or through the DHCP. In this embodiment, the IP address is obtained through the DHCP.

Step 411: transmitting a DHCP request from the UE to the AM-FE to request to assign an IP address.

Step 412: forwarding the DHCP request from the AM-FE to an NAC-FE.

Step 413: transmitting a binding notification message from the NAC-FE to a TLM-FE.

The binding notification message includes a temporary address and other information that is associated with transportation such as a logic address and a physic port address which are assigned by the NAC-FE to the UE.

Step 414: transmitting policy information such as Quality of Service (QoS) configuration from the TLM-FE to an RACF.

Step 415: transmitting the binding information of the user address from the TLM-FE to the NAC-FE through the binding response message.

Step 416: transmitting the new IP address from the NAC-FE to the UE through a DHCP response message.

### (3) The ID/LOC mapping process (steps 421-422):

When the location of a user changes due to its mobility or multihoming, an address update is performed through the ILSM-FE; and after the user obtains the new IP address, the new IP address is mapped to the Host ID in the ILSM-FE. During this process, the user identification (Host ID) does not change. The ID/LOC mapping process is specified as below.

Step 421: transmitting an ID/LOC mapping request from the UE to the ILSM-FE, wherein the message includes a new IP address of the user.

After obtaining the IP address, the mapping between the Host ID and the IP address is performed in the ILSM-FE, the mapping process may be voluntarily initiated by the terminal or by the network side. In this embodiment, the mapping process is voluntarily initiated by the UE.

Step 422: transmitting an ID/LOC mapping response from the ILSM-FE to the UE.

After completing the mapping between the Host ID and the LOC, the ILSM-FE transmits the ID/LOC mapping response message to the UE.

When the user is in mobility or multihoming scenario, the same user identification (Host ID) at a same time or in different time may correspond to a plurality of IP addresses. In other words, the mapping between the user identification (Host ID) and the IP address(es) in a database of the ILSM-FE may be one-to-one or one-to-multiple. It is different from the scenario that in a general NGN network, only one IP address corresponds to one user in the TLM at a same time.

### (4) The transport location management process:

The SCF requests the ILSM-FE for the location information of the current user, and the ILSM-FE reports the location LOC where the user is currently located to the SCF. In this process, the SCF searches for the location LOC where the user is currently located based on the user identification (Host ID). The SCF firstly finds the ILSM-FE, and then finds the location LOC where the user is currently located based on the mapping between the Host ID and the LOC. It is different from searching for the current IP address of the user by the SCF directly through the TLM-FE in a general NGN network.

### Embodiment 2:

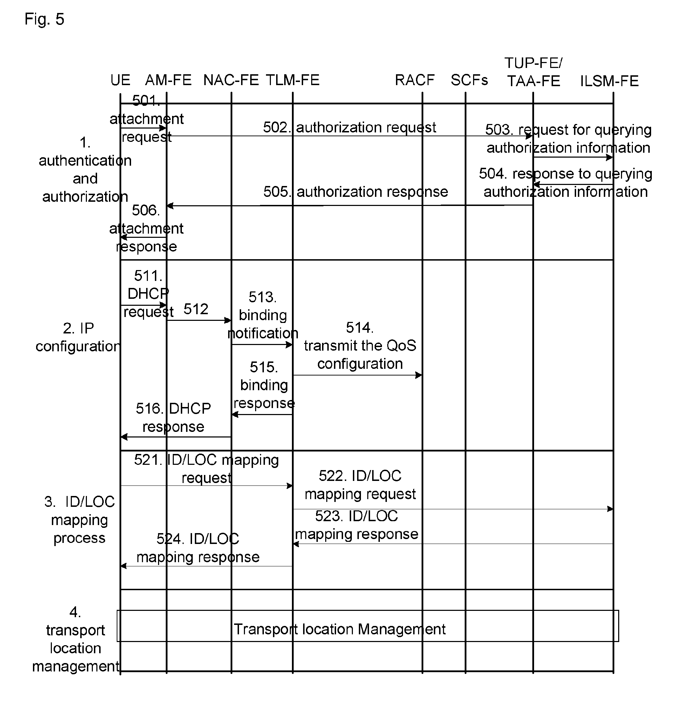

Fig. 5 is a schematic diagram illustrating an ID-Loc-Split terminal attachment process in an NGN system with the terminal initiating a mapping request and with the participation of a gateway. The specific steps are specified as follows.
(1) The authentication and authorization process (steps 501-506): the authentication and authorization process with the participation of a gateway is the same as the authentication and authorization process without the participation of a gateway in Embodiment 1.
(2) The IP address configuration process (steps 511-516): the IP address configuration process with the participation of a gateway is the same as the IP address configuration process without the participation of a gateway in Embodiment 1.
(3) The ID/LOC mapping process (steps 521-524):
   Step 521: transmitting an ID/LOC mapping request message from the UE to the TLM-FE, wherein the message includes a new IP address of the UE.
   Step 522: forwarding the ID/LOC mapping request message from the TLM-FE to the ILSM-FE.
   Step 523: transmitting an ID/ LOC mapping response from the ILSM-FE to the TLM-FE after the ILSM-FE performs the binding via mapping between the Host ID and the IP address.
   Step 524: transmitting the ID/LOC mapping response message from the TLM-FE to the UE.
(4) The transport location management process:
   The processing manner of the transportation location management process with the participation of a gateway is the same as that of the transportation location management process without the participation of a gateway.

### Embodiment 3

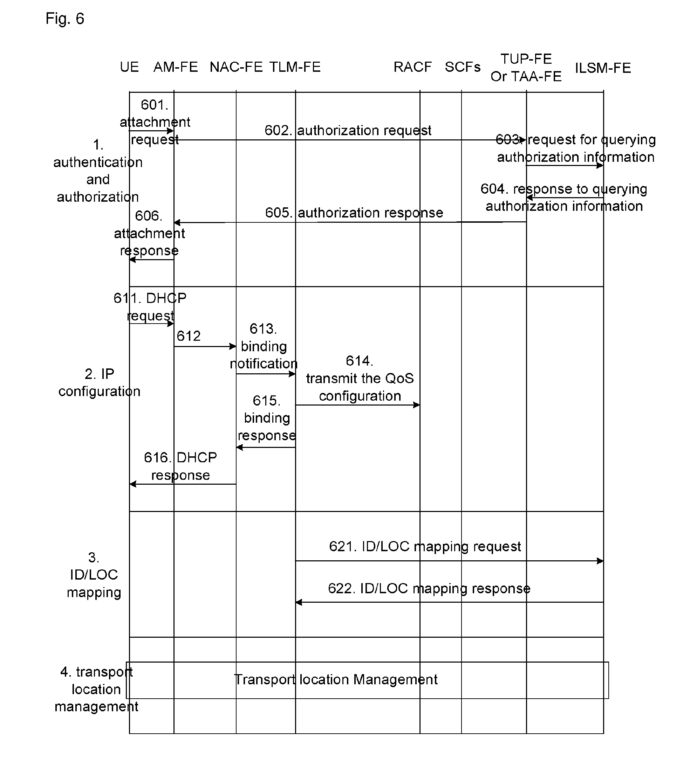

Fig. 6 is a schematic diagram illustrating an ID-Loc-Split terminal attachment process in an NGN system with the network side initiating a mapping request. The specific steps are specified as follows.
(1) The authentication and authorization process (steps 601-606): the authentication and authorization process in this embodiment is the same as the authentication and authorization process without the participation of a gateway in Embodiment 1.
(2) The IP address configuration process (steps 611-616): the IP address configuration process in this embodiment is the same as the IP address configuration process without the participation of a gateway in Embodiment 1.
(3) The ID/LOC mapping process (steps 621-622):
   Step 621: transmitting an ID/LOC mapping request from the TLM-FE to the ILSM-FE, wherein the message includes a new IP address of the UE.
   Step 622: transmitting an ID/LOC mapping response from the ILSM-FE to the TLM-FE after the ILSM-FE performs the binding via mapping between the Host ID and the IP address.
(4) The transport location management process:
   The processing manner of the transport location management process in this embodiment is the same as that of the transport location management process without the participation of a gateway in Embodiment 1.
   What are described above are only preferred embodiments of the disclosure, and not intended for limiting the protection scope of the disclosure.

## Claims

1. An attachment method for Identification-Location Split, ID-Loc-Split in an Next Generation Network, NGN, comprising:
performing a network attachment process for a User Terminal, UE through an ID-Loc-Split Mapping Function Entity, ILSM-FE, wherein a user identification, Host ID, is used during an authentication and authorization process, the method specifically comprising:
A: performing authentication and authorization to a user identity through the ILSM-FE during the authentication and authorization process;
B: assigning an IP address to the user terminal through an IP address configuration process; and
C: when location of a user changes,
a) the UE or a Transport Location Management Functional Entity, TLM-FE, sends a request for user identification to location, ID/LOC mapping, and
b) the ILSM-FE responds to the request, and performing a mapping between the Host ID and the IP address by the ILSM-FE;
**characterized in that** when the UE is in mobility or multihoming scenario, the mapping between the Host ID and the IP address in a database of the ILSM-FE is one-to-multiple,
wherein in step C, initiating (Step 421) the ID/LOC mapping request to the ILSM-FE by the user terminal, wherein the request includes a new IP address of the user; and transmitting (Step 422) a result of mapping from the ILSM-FE to the user terminal after the ILSM-FE performs the mapping between the Host ID and the IP address; or
firstly initiating (Step 521) the ID/LOC mapping request to a TLM-FE by the user terminal, wherein the request includes a new IP address of the user; and forwarding (Step 522) the ID/LOC mapping request from the TLM-FE to the ILSM-FE; and
after the ILSM-FE performs the mapping between the Host ID and the IP address, transmitting a result of mapping to the user terminal through the ILSM-FE; or
initiating the ID/LOC mapping request to the ILSM-FE by the TLM-FE, wherein the request includes a new IP address of the user; transmitting an ID/LOC mapping response from the ILSM-FE to the TLM-FE after the ILSM-FE performs the mapping between the Host ID and the IP address.

2. The method according to claim 1, wherein in step A,
when a Transport Authentication and Authorization Functional Entity, TAA-FE, receives an authorization request (Step 402) transmitted from an Access Management Functional Entity, AM-FE, transmitting (Step 403) a request message for querying authorization information from the TAA-FE to the ILSM-FE; wherein the request message for querying authorization information includes security parameters required for authenticating the user identity;
performing authentication and authorization to the Host ID by the ILSM-FE based on the security parameters and transmitting a result of authentication and authorization from the ILSM-FE to the TAA-FE through a response message for querying authorization information.

3. The method according to claim 1, wherein the Host ID is a public key for uniquely identifying a user, and the ILSM-FE performs authentication to the Host ID based on the security parameters.

4. An attachment system for Identification-Location Split, ID-Loc-Split, in an Next Generation Network, NGN, comprising a User Terminal, UE, an Access Management Functional Entity, AM-FE, a Network Access Configuration Functional Entity, NAC-FE, a Transport Location Management Functional Entity, TLM-FE, a Resource Admission Control Function, RACF, a Service Control Function, SCF, and a Transport Authentication and Authorization Functional Entity, TAA-FE, the system further comprising:
an ID-Loc-Split Mapping Function Entity, ILSM-FE, configured to perform authentication and authorization to a user identification, Host ID, based on security parameters transmitted by the TAA-FE, and perform a mapping between the Host ID and an IP address based on an user identification to location, ID/LOC mapping request transmitted from the UE or the TLM-FE;
**characterized in that** when the UE is in mobility or multihoming scenario, the mapping between the Host ID and the IP address in a database of the ILSM-FE is one-to-multiple,
wherein when a location of the user changes,
the user terminal is configured to initiate the ID/LOC mapping request to the ILSM-FE, wherein the request includes a new IP address of the user; the ILSM-FE is configured to transmit a result of mapping after performing the mapping between the Host ID and the IP address; or
the user terminal is configured to firstly initiate the ID/LOC mapping request to the TLM-FE, wherein the request includes a new IP address of the user; the TLM-FE is configured to forward the ID/LOC mapping request to the ILSM-FE; the ILSM-FE is configured to transmit a result of mapping to the user terminal through the ILSM-FE after performing the mapping between the Host ID and the IP address; or
the TLM-FE is configured to initiate the ID/LOC mapping request to the ILSM-FE, wherein the request includes a new IP address of the user; the ILSM-FE is configured to transmit an ID/LOC mapping response to the TLM-FE after performing the mapping between the Host ID and the IP address.

5. The system according to claim 4, wherein during a network attachment process, the TAA-FE is configured to transmit a request message for querying authorization information to the ILSM-FE after receiving an authorization request transmitted from the AM-FE, wherein the message includes security parameters required for authenticating user identity; the ILSM-FE is configured to perform authentication and authorization to the Host ID based on the security parameters and transmit a result of authentication and authorization to the TAA-FE through a response message for querying authorization information.

6. The system according to claim 5, wherein the Host ID is a public key for uniquely identifying a user, and the ILSM-FE is configured to perform authentication and authorization to the user identification, Host ID, based on the security parameters included in the request message for querying authorization information.

## Patentansprüche

1. Anschlussverfahren zur Trennung von Identifikation und Standort, ID-Loc-Split, in einem Netz der nächsten Generation, NGN, umfassend:
Durchführen eines Netzanschlussprozesses für ein Benutzerendgerät, UE, durch eine Instanz mit ID-Loc-Split-Zuordnungsfunktion, ILSM-FE, wobei eine Benutzeridentifikation, Host-ID, während eines Authentifizierungs- und Autorisierungsprozesses verwendet wird, wobei das Verfahren insbesondere umfasst:
A: Durchführen von Authentifizierung und Autorisierung an einer Benutzeridentität durch die ILSM-FE während des Authentifizierungs- und Autorisierungsprozesses;
B: Zuordnen einer IP-Adresse zum Benutzerendgerät durch einen IP-Adresskonfigurationsprozess; und,
C: wenn sich der Standort eines Benutzers ändert,
a) sendet die UE oder eine Instanz mit Transport- und Standortverwaltungsfunktion, TLM-FE, eine Anforderung für Zuordnung der Benutzeridentifikation zum Standort, ID/LOC, und
b) antwortet die ILSM-FE auf die Anforderung, und es wird eine Zuordnung zwischen der Host-ID und der IP-Adresse durch die ILSM-FE durchgeführt;
**dadurch gekennzeichnet, dass**, wenn die UE in einem Mobilitäts- oder Multihoming-Szenario ist, die Zuordnung zwischen der Host-ID und der IP-Adresse in einer Datenbank der ILSM-FE eine Eins-zu-mehreren-Zuordnung ist,
wobei in Schritt C die ID/LOC-Zuordnungsanforderung durch das Benutzerendgerät an die ILSM-FE ausgelöst wird (Schritt 421), wobei die Anforderung eine neue IP-Adresse des Benutzers umfasst; und nach dem Durchführen der Zuordnung zwischen der Host-ID und der IP-Adresse durch die ILSM-FE ein Ergebnis der Zuordnung von der ILSM-FE an das Benutzerendgerät gesendet wird (Schritt 422); oder
die ID/LOC-Zuordnungsanforderung durch das Benutzerendgerät zuerst an eine TLM-FE ausgelöst wird (Schritt 521), wobei die Anforderung eine neue IP-Adresse des Benutzers umfasst; und die ID/LOC-Zuordnungsanforderung von der TLM-FE an de ILSM-FE weitergeleitet wird (Schritt (522); und
nach dem Durchführen der Zuordnung zwischen der Host-ID und der IP-Adresse durch die ILSM-FE ein Ergebnis der Zuordnung durch die ILSM-FE an das Benutzerendgerät gesendet wird; oder
die ID/LOC-Zuordnungsanforderung durch die TLM-FE an die ILSM-FE ausgelöst wird, wobei die Anforderung eine neue IP-Adresse des Benutzers umfasst; und nach dem Durchführen der Zuordnung zwischen der Host-ID und der IP-Adresse durch die ILSM-FE eine ID/LOC-Zuordnungsantwort von der ILSM-FE an die TLM-FE gesendet wird.

2. Verfahren nach Anspruch 1, wobei in Schritt A,
wenn eine Instanz mit Transport-, Authentifizierungs- und Autorisierungsfunktion, TAA-FE, eine Autorisierungsanforderung empfängt (Schritt (402), die von einer Instanz mit Zugangsverwaltungsfunktion, AM-FE, gesendet wird, eine Anforderungsnachricht zum Abfragen von Autorisierungsinformationen von der TAA-FE an die ILSM-FE gesendet wird (Schritt 403); wobei die Anforderungsnachricht zum Abfragen von Autorisierungsinformationen Sicherheitsparameter umfasst, die zum Authentifizieren der Benutzeridentität benötigt werden;
Authentifizierung und Autorisierung an der Host-ID von der ILSM-FE basierend auf den Sicherheitsparametern durchgeführt werden, und ein Ergebnis der Authentifizierung und Autorisierung von der ILSM-FE durch eine Antwortnachricht zum Abfragen von Autorisierungsinformationen an die TAA-FE gesendet wird.

3. Verfahren nach Anspruch 1, wobei die Host-ID ein öffentlicher Schlüssel zum eindeutigen Identifizieren eines Benutzers ist, und die ILSM-FE Authentifizierung an der Host-ID basierend auf den Sicherheitsparametern durchführt.

4. Anschlusssystem zur Trennung von Identifikation und Standort, ID-Loc-Split, in einem Netz der nächsten Generation, NGN, umfassend ein Benutzerendgerät, UE, eine Instanz mit Zugangsverwaltungsfunktion, AM-FE, eine Instanz mit Netzzugangskonfigurationsfunktion, NAC-FE, eine Instanz mit Transport- und Standortverwaltungsfunktion, TLM-FE, eine Ressourcenzulassungssteuerfunktion, RACF, eine Dienststeuerfunktion, SCF, und eine Instanz mit Transport-, Authentifizierungs- und Autorisierungsfunktion, TAA-FE, wobei das System ferner umfasst:
eine Instanz mit ID-Loc-Split-Zuordnungsfunktion, ILSM-FE, die so konfiguriert ist, dass sie Authentifizierung und Autorisierung an einer Benutzeridentifikation, Host-ID, basierend auf Sicherheitsparametern durchführt, die durch die TAA-FE gesendet werden, und eine Zuordnung zwischen der Host-ID und einer IP-Adresse basierend auf einer Anforderung für Zuordnung der Benutzeridentifikation zum Standort, ID/LOC, durchführt, die von der UE oder der TLM-FE gesendet wird; **dadurch gekennzeichnet, dass**, wenn die UE in einem Mobilitäts- oder Multihoming-Szenario ist, die Zuordnung zwischen der Host-ID und der IP-Adresse in einer Datenbank der ILSM-FE eine Eins-zu-mehreren-Zuordnung ist,
wobei das Benutzerendgerät so konfiguriert ist, dass es, wenn sich ein Standort des Benutzers ändert, die ID/LOC-Zuordnungsanforderung an die ILSM-FE auslöst, wobei die Anforderung eine neue IP-Adresse des Benutzers umfasst; die ILSM-FE so konfiguriert ist, dass sie nach dem Durchführen der Zuordnung zwischen der Host-ID und der IP-Adresse ein Ergebnis der Zuordnung sendet; oder
das Benutzerendgerät so konfiguriert, dass es die IP/LOC-Zuordnungsanforderung zuerst an die TLM-FE auslöst, wobei die Anforderung eine neue IP-Adresse des Benutzers umfasst; die TLM-FE so konfiguriert ist, dass sie die ID/LOC-Zuordnungsanforderung an die ILSM-FE weiterleitet; die ILSM-FE so konfiguriert ist, dass sie nach dem Durchführen der Zuordnung zwischen der Host-ID und der IP-Adresse ein Ergebnis der Zuordnung durch die ILSM-FE an das Benutzerendgerät sendet; oder
die TLM-FE so konfiguriert ist, dass sie die ID/LOC-Zuordnungsanforderung an die ILSM-FE auslöst, wobei die Anforderung eine neue IP-Adresse des Benutzers umfasst; die ILSM-FE so konfiguriert ist, dass sie nach dem Durchführen der Zuordnung zwischen der Host-ID und der IP-Adresse eine ID/LOC-Zuordnungsantwort an die TLM-FE sendet.

5. System nach Anspruch 4, wobei die TAA-FE so konfiguriert ist, dass sie während eines Netzanschlussprozesses nach dem Empfang einer von der AM-FE gesendeten Autorisierungsanforderung eine Anforderungsnachricht zum Abfragen von Autorisierungsinformationen an die ILSM-FE sendet, wobei die Nachricht Sicherheitsparameter umfasst, die zum Authentifizieren der Benutzeridentität benötigt werden; die ILSM-FE so konfiguriert ist, dass sie Authentifizierung und Autorisierung an der Host-ID basierend auf den Sicherheitsparametern durchführt und ein Ergebnis der Authentifizierung und Autorisierung durch eine Antwortnachricht zum Abfragen von Autorisierungsinformationen an die TAA-FE sendet.

6. System nach Anspruch 5, wobei die Host-ID ein öffentlicher Schlüssel zum eindeutigen Identifizieren eines Benutzers ist, und die ILSM-FE so konfiguriert ist, dass sie Authentifizierung und Autorisierung an der Host-ID basierend auf den Sicherheitsparametern durchführt, die in der Anforderungsnachricht zum Abfragen von Autorisierungsinformationen enthalten sind.

## Revendications

1. Procédé de connexion pour un dédoublement d'identifiant et d'emplacement, « ID-Loc-Split », dans un réseau de nouvelle génération, NGN, comprenant les étapes ci-dessous consistant à :
mettre en oeuvre un processus de connexion réseau pour un équipement d'utilisateur, UE, par le biais d'une entité fonctionnelle de mise à correspondance de dédoublement « ID-Loc-Split », ILSM-FE, dans lequel un identifiant d'utilisateur, ID d'hôte, est utilisé au cours d'un processus d'authentification et d'autorisation, le procédé comprenant spécifiquement les étapes ci-dessous consistant à :
A : mettre en oeuvre une authentification et autorisation sur une identité d'utilisateur par le biais de l'entité ILSM-FE, au cours du processus d'authentification et d'autorisation ;
B : affecter une adresse IP à l'équipement d'utilisateur par le biais d'un processus de configuration d'adresse IP ; et
C : lorsque l'emplacement d'un utilisateur change :
a) l'équipement UE, ou une entité fonctionnelle de gestion d'emplacement de transport, TLM-FE, envoie une demande de mise en correspondance d'identifiant d'utilisateur sur l'emplacement, « ID/LOC » ; et
b) l'entité ILSM-FE répond à la demande, et met en oeuvre une mise en correspondance entre l'ID d'hôte et l'adresse IP par le biais de l'entité ILSM-FE ;
**caractérisé en ce que**, lorsque l'équipement UE est dans un scénario de mobilité ou de multiconnexion, la mise en correspondance entre l'ID d'hôte et l'adresse IP dans une base de données de l'entité ILSM FE est du type « un à plusieurs » ;
dans lequel, à l'étape C, les étapes consistent à initier (étape 421) la demande de mise en correspondance d'identifiant/emplacement, « ID/LOC », au niveau de l'entité ILSM-FE par l'équipement d'utilisateur, dans lequel la demande inclut une nouvelle adresse IP de l'utilisateur ; et transmettre (étape 422) un résultat de mise en correspondance de l'entité ILSM-FE à l'équipement d'utilisateur, après que l'entité ILSM-FE a mis en oeuvre la mise en correspondance entre l'ID d'hôte et l'adresse IP ; ou
initier tout d'abord (étape 521) la demande de mise en correspondance « ID/LOC » au niveau d'une entité TLM-FE par l'équipement d'utilisateur, dans lequel la demande inclut une nouvelle adresse IP de l'utilisateur ; et acheminer (étape 522) la demande de mise en correspondance « ID/LOC » de l'entité TLM-FE à l'entité ILSM-FE ; et
après que l'entité ILSM-FE a mis en oeuvre la mise en correspondance entre l'ID d'hôte et l'adresse IP, transmettre un résultat de mise en correspondance à l'équipement d'utilisateur par le biais de l'entité ILSM-FE ; ou
initier la demande de mise en correspondance « ID/LOC » au niveau de l'entité ILSM-FE par l'entité TLM-FE, dans lequel la demande inclut une nouvelle adresse IP de l'utilisateur ; transmettre une réponse de mise en correspondance « ID/LOC » de l'entité ILSM-FE à l'entité TLM-FE après que l'entité ILSM-FE a mis en oeuvre la mise en correspondance entre l'ID d'hôte et l'adresse IP.

2. Procédé selon la revendication 1, dans lequel, à l'étape A,
lorsqu'une entité fonctionnelle d'authentification et autorisation de transport, TAA-FE, reçoit une demande d'autorisation (étape 402) transmise par une entité fonctionnelle de gestion d'accès, AM-FE, transmettre (étape 403) un message de demande destiné à interroger des informations d'autorisation de l'entité TAA-FE à l'entité ILSM-FE ; dans lequel le message de demande destiné à interroger des informations d'autorisation inclut des paramètres de sécurité nécessaires pour authentifier l'identité d'utilisateur ;
mettre en oeuvre une authentification et autorisation au niveau de l'ID d'hôte par le biais de l'entité ILSM-FE, sur la base des paramètres de sécurité, et transmettre un résultat d'authentification et autorisation de l'entité ILSM-FE à l'entité TAA-FE, par le biais d'un message de réponse pour interroger des informations d'autorisation.

3. Procédé selon la revendication 1, dans lequel l'ID d'hôte est une clé publique permettant d'identifier de façon unique un utilisateur, et l'entité ILSM-FE met en oeuvre une authentification au niveau de l'ID d'hôte sur la base des paramètres de sécurité.

4. Système de connexion pour un dédoublement d'identifiant et d'emplacement, « ID-Loc-Split », dans un réseau de nouvelle génération, NGN, comprenant un équipement d'utilisateur, UE, une entité fonctionnelle de gestion d'accès, AM-FE, une entité fonctionnelle de configuration d'accès réseau, NAC-FE, une entité fonctionnelle de gestion d'emplacement de transport, TLM-FE, une fonction de commande d'admission aux ressources, RACF, une fonction de commande de service, SCF, et une entité fonctionnelle d'authentification et autorisation de transport, TAA-FE, le système comprenant en outre :
une entité fonctionnelle de mise à correspondance de dédoublement « ID-Loc-Split », ILSM-FE, configurée de manière à mettre en oeuvre une authentification et autorisation au niveau d'un identifiant d'utilisateur, « ID d'hôte », sur la base de paramètres de sécurité transmis par l'entité TAA-FE, et à mettre en oeuvre une mise en correspondance entre l'ID d'hôte et une adresse IP, sur la base d'une demande de mise en correspondance d'identification d'utilisateur sur l'emplacement, « ID/LOC », transmise à partir de l'équipement UE ou de l'entité TLM-FE ;
**caractérisé en ce que**, lorsque l'équipement UE est dans un scénario de mobilité ou de multiconnexion, la mise en correspondance entre l'ID d'hôte et l'adresse IP dans une base de données de l'entité ILSM-FE est du type « un à plusieurs » ;
dans lequel, lorsqu'un emplacement de l'utilisateur change :
l'équipement d'utilisateur est configuré de manière à initier la demande de mise en correspondance « ID/LOC » au niveau de l'entité ILSM-FE, dans lequel la demande inclut une nouvelle adresse IP de l'utilisateur ; l'entité ILSM-FE est configurée de manière à transmettre un résultat de mise en correspondance suite à la mise en oeuvre de la mise en correspondance entre l'ID d'hôte et l'adresse IP ; ou
l'équipement d'utilisateur est configuré de manière à initier tout d'abord la demande de mise en correspondance « ID/LOC » au niveau de l'entité TLM-FE, dans lequel la demande inclut une nouvelle adresse IP de l'utilisateur ; l'entité TLM-FE est configurée de manière à acheminer la demande de mise en correspondance « ID/LOC » vers l'entité ILSM-FE ; l'entité ILSM-FE est configurée de manière à transmettre un résultat de mise en correspondance à l'équipement d'utilisateur par le biais de l'entité ILSM-FE, suite à la mise en oeuvre de la mise en correspondance entre l'ID d'hôte et l'adresse IP ; ou
l'entité TLM-FE est configurée de manière à initier la demande de mise en correspondance « ID/LOC » au niveau de l'entité ILSM-FE, dans lequel la demande inclut une nouvelle adresse IP de l'utilisateur ; l'entité ILSM-FE est configurée de manière à transmettre une réponse de mise en correspondance « ID/LOC » à l'entité TLM-FE suite à la mise en oeuvre de la mise en correspondance entre l'ID d'hôte et l'adresse IP.

5. Système selon la revendication 4, dans lequel, au cours d'un processus de connexion réseau, l'entité TAA-FE est configurée de manière à transmettre un message de demande destiné à interroger des informations d'autorisation à l'entité ILSM-FE, suite à la réception d'une demande d'autorisation transmise à partir de l'entité AM-FE, dans lequel le message inclut des paramètres de sécurité nécessaires en vue d'authentifier une identité d'utilisateur ; l'entité ILSM-FE est configurée de manière à mettre en oeuvre une authentification et autorisation au niveau de l'ID d'hôte, sur la base des paramètres de sécurité, et à transmettre un résultat d'authentification et autorisation à l'entité TAA-FE, par le biais d'un message de réponse pour interroger des informations d'autorisation.

6. Système selon la revendication 5, dans lequel l'ID d'hôte est une clé publique permettant d'identifier de façon unique un utilisateur, et l'entité ILSM-FE est configurée de manière à mettre en oeuvre une authentification et autorisation au niveau de l'identifiant d'utilisateur, ID d'hôte, sur la base des paramètres de sécurité inclus dans le message de demande pour interroger des informations d'autorisation.
